(19) Europäisches Patentamt
European Patent Office
Office européen des brevets

(11) EP 1 130 064 A1

(12) EUROPEAN PATENT APPLICATION
published in accordance with Art. 158(3) EPC

(43) Date of publication:
05.09.2001 Bulletin 2001/36

(21) Application number: 99954420.8

(22) Date of filing: 08.11.1999

(51) Int Cl.7: C09B 25/00, C09B 67/44, C09B 67/14, C09D 11/02, B41M 5/00, B41J 2/01

(86) International application number:
PCT/JP99/06193

(87) International publication number:
WO 00/27928 (18.05.2000 Gazette 2000/20)

(84) Designated Contracting States:
AT BE CH CY DE DK ES FI FR GB GR IE IT LI LU MC NL PT SE

(30) Priority: 09.11.1998 JP 31781798

(71) Applicant: Nippon Kayaku Kabushiki Kaisha
Tokyo 102-8172 (JP)

(72) Inventors:
- KITAYAMA, Hirokazu
Omiya-shi Saitama-ken 330-0835 (JP)
- SHIRASAKI, Yasuo
Omiya-shi Saitama-ken 330-0826 (JP)
- MURAKAMI, Yasuo
Kawaguchi-shi Saitama-ken 332-0032 (JP)
- ONO, Hiroaki
Tokyo 174-0051 (JP)

(74) Representative:
Gille Hrabal Struck Neidlein Prop Roos
Patentanwälte,
Brucknerstrasse 20
40593 Düsseldorf (DE)

# (54) DYE COMPOSITION, INK COMPOSITION, AND INK-JET RECORDING METHOD

(57) The present invention is to provide a novel water-soluble sulfonated quinophthalone dye composition which has a hue and brightness both suited for ink-jet printing and gives a print having excellent fastness to light, water, etc.

Namely, the present invention relates to a water-soluble dye composition obtained by sulfonating a compound represented by formula (2)

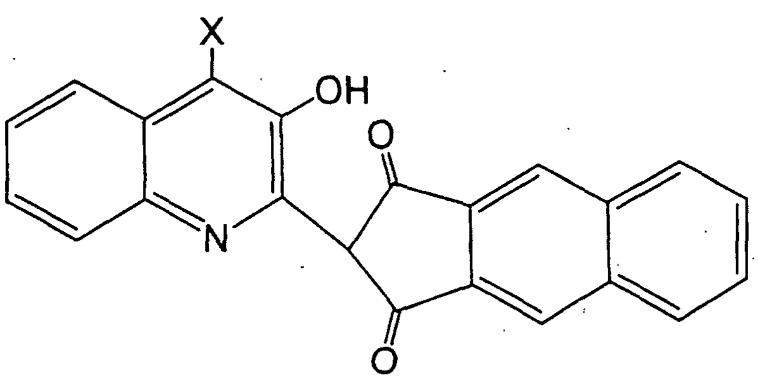

(2)

(wherein, X shows a hydrogen atom, a chlorine atom or a bromine atom), a water-based ink composition containing the said composition and a method of ink-jet printing by using the said ink composition.

EP 1 130 064 A1

## Description

TECHNICAL FIELD

The present invention relates to a novel sulfonated quinophthalone dye composition, a water-based yellow ink composition, and a method for ink-jet printing.

BACKGROUND ART

Various ink jetting processes have been developed for the recording method by means of ink-jet printers, and any process comprises generating ink droplets to deposit them onto various recording materials (such as paper, film, cloth) for recording. The printing method by means of ink-jet printer has rapidly been spread in recent years and will be propagated in future because the method brings about no noise due to the system in which a printing head does not contact with the recording material; because the method beneficially makes it possible to print on any material even if it is uneven in surface, soft or brittle; and because the method advantageously allows the printer to become downsized easily, to work in a high-speed and to give color printing. For recording an image information or a character information pictured on a computer color display in color by means of an ink-jet printer, the information is generally printed according to subtractive color mixing of inks of four colors, namely yellow(Y), magenta(M), cyan(C) and black(K). In order to print reproducibly an image pictured by additive color mixing of red(R), green(G) ,blue(B) on a CRT display as faithfully as possible according to subtractive color mixing, the dyestuffs used, especially ones for a YMC ink, are desired to have both color hues close to those of the respective standards of YMC("Japan Color Standard Paper" published by Japan Printing Machinery Manufacturers Association) and vividness. Additionally, it is required that the resulting ink composition is stable for long-term storage and that the resulting printed image is of a high optical density and has excellent fastness including water fastness and light fastness. The ink composition, when used widely, for example, for a display such as an advertisement, is especially required to provide a light-fast image because the image is often exposed to light (electric lamp light, fluorescent light, or sun light).

Ink-jet printers are increasingly used in a wide range from a small one for OA to a big one for industrial use. So, excellence in fastness such as water fastness and light fastness of the printed image is more strictly demanded. The water fastness is substantially improved by coating inorganic micro particle such as porous silica, cationic polymer, alumina sol, or specific ceramics that can absorb dyestuff from ink composition, on a paper sheet with PVA resin. Various coated sheets for ink-jet printing are already available on the market. But light fastness is not yet remarkably improved by any established technique, and so still remains an important problem to be solved.

The ink composition, when prepared to use for a water-based ink composition, is required to have a good filterability through a membrane filter in the production process, and to have a good storage stability to show no crystal deposition as well as no change in physical property and in color after a long storage.

The chemical skeletal structure of yellow dyestuffs used in a water-soluble ink for ink-jet printing is represented by an azo type. Some of the azo type are indeed good in hue and water fastness, but are inferior in light fastness in general. They are inferior in light fastness to the other dyestuffs such as cyan dyestuffs in which copper phthalocyanine type is representative, especially.

An object of the present invention is to provide a yellow dyestuff that has hue and vividness suitable for ink-jet printing, supplies the recorded material with a high light fastness and a high water fastness, and has a high color value; and to provide a good water-based yellow ink composition that shows little storage change and is free from blocking in a nozzle even if used in a high concentration.

The 3'-oxybenzoquinophtalone derivatives represented by Formula (2) as shown later, which are used for the starting materials in the present invention, are described in the JP No.16009/1978 B specification to be excellent yellow dyestuffs in various kinds of fastness. The dyestuffs, however, cannot be used for a water-based ink composition because they are insoluble dyestuffs in water.

DISCLOSURE OF THE INVENTION

The present inventors made a diligent study to solve the above problem and, as a result, have completed the present invention by finding that the 3'-oxybenzoquinophtalone derivatives represented by Formula (2) as shown later are sulfonated with fuming sulfuric acid to obtain water-soluble 3'-oxybenzoquinophtalone derivatives which unexpectedly have excellent vividness and fastness in spite of water-solubidization.

Namely, the present invention is as follows:

(1) A water-soluble dye composition comprising a compound obtained by the sulfonation of the compound represented by Formula (2):

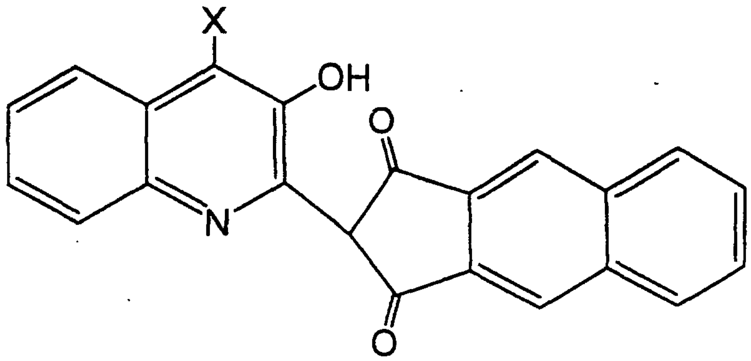

(2)

(In the formula, X shows hydrogen atom, chlorine atom, or bromine atom) or the salt thereof.

(2) A water-soluble dye composition according to the above (1), wherein the said compound obtained by the sulfonation of the compound represented by Formula (2) or the salt thereof in the aqueous solution has two maximum absorption wavelengths, the one existing between 455nm and 465nm, and another existing between 430nm and 440nm.

(3) A water-soluble dye composition according to the above (1) or (2), wherein the said compound obtained by the sulfonation of the compound represented by Formula (2) or the salt thereof is represented by Formula (1):

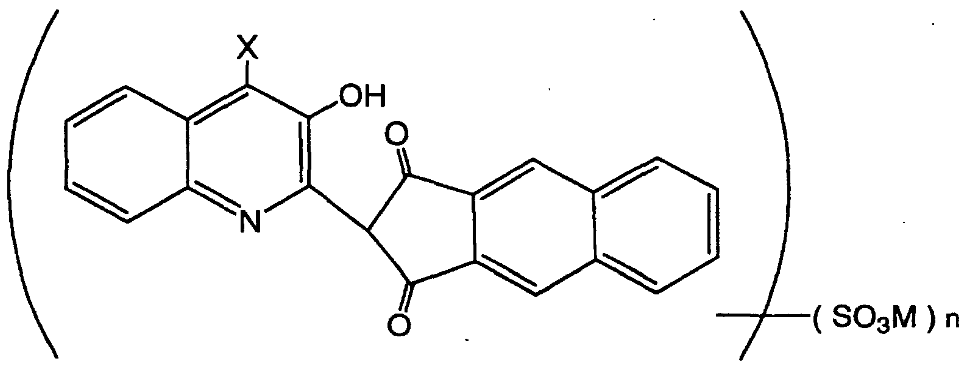

(1)

(In the formula, X shows hydrogen atom, chlorine atom, or bromine atom; M shows hydrogen atom, an alkali metal, an alkali earth metal, the cation of an organic amine or the ammonium ion; and n is an integer of 1-4).

(4) A water-soluble dye composition according to any one of the above (1) to (3), wherein the said compound obtained by the sulfonation of the compound represented by Formula (2) or the salt thereof is a compound obtained by the sulfonation of the compound represented by Formula (2) carried out in 5-65% by weight fuming sulfuric acid at a reaction temperature of 0-100°C or the salt thereof.

(5) A water-soluble dye composition according to any one of the above (1) to (4), wherein the said compound obtained by the sulfonation of the compound represented by Formula (2) or the salt thereof is a compound obtained by the sulfonation of the compound represented by Formula (2) carried out in 10-45% by weight fuming sulfuric acid at a reaction temperature of 10-80°C or the salt thereof.

(6) A water-based yellow ink composition comprising the water-soluble dye composition according to any one of the above (1) to (5) as a dye component.

(7) A water-based yellow ink composition according to the above (6), wherein the said composition contains water and water-soluble organic solvents.

(8) A water-based yellow ink composition according to the above (6) or (7), wherein the total content of sodium chloride and sodium sulfate in the said water-soluble dye composition is 1% by weight or less.

(9) A water-based yellow ink composition according to any one of the above (6) to (8), wherein the said composition is prepared for ink-jet printing.

(10) A method for ink-jet printing which comprises using the water-based yellow ink composition according to any one of the above (6) to (9) as an ink, in an ink-jet printing method that ink droplets are ejected responding to record

signals to record onto a recording material.

(11) A method for ink-jet printing according to the above (10), wherein the said recording material is an information transmission sheet.

(12) A container holding the water-based yellow ink composition according to any one of the above (6) to (9).

(13) An ink-jet printer that comprises being equipped with the container according to the above (12).

(14) A colored article comprising the water-soluble dye composition according to any one of the above (1) to (5).

BEST MODE FOR CARRYING OUT THE INVENTION

The water-soluble dye composition of the present invention is a composition (a quinophthalone dye composition) comprising substantially the compound obtained by the sulfonation of the compound represented by Formula (2) or the salt thereof. The composition may contain the other components such as a carrier and a diluent. The quinophthalone dye composition is generally soluble in water and used for a yellow component.

The dye composition of the present invention has generally a water-solubility of 10g/l or more, preferably of 50g/l or more, and more preferably of 100g/l.

In Formula (1) and Formula (2) as shown above, X shows hydrogen atom, chlorine atom, or bromine atom. The preferable X is hydrogen atom.

In Formula (1), M shows hydrogen atom, an alkali metal, an alkali earth metal, the cation of an organic amine or the ammonium ion. The alkali metal includes natrium, kalium, and lithium. The alkali earth metal includes calcium and magnesium. The organic amine includes a lower alkylamine such as methylamine and ethylamine and a hydroxy lower alkylamine such as monoethanolamine, diethanolamine, triethanolamine, mono-isopropanolamine, diisopropanolamine and tri isopropanolamine. The preferable Mis hydrogen atom; an alkalimetal such as natrium, kalium, and lithium; an ammonium ion; an alkanolamine ion such as monoethanolamine ion, diethanolamine ion, triethanolamine ion, monoisopropanolamine ion, diisopropanolamine ion and triisopropanolamine ion.

The above lower alkyl includes a C1-C6, preferably C1-C4 alkyl group.

In Formula (1), n is an integer of 1-4. The water-soluble dye composition of the present invention may exist as a mixture of the different compounds having any n of 1-4. A compound ratio in the mixture is difficult to regulate into a constant because it is liable to vary, for example, depending on a reaction condition. The composition having any compound ratio, as long as it is water-soluble, is applicable for a water-soluble dye composition of the present invention. It is relatively hard to determine the value of then. It is, however, possible to determine by carrying out a suitable combination of analytical methods such as high performance liquid chromatography(HPLC), thin-layer chromatography (TLC) and mass spectrography such as ESI-MS spectrography. The water-soluble dye composition of the present invention generally comprising, but is not limited to, a mixture of the different compounds having any n of 1-4. The dye composition of the present invention may include a composition comprising substantially a single compound isolated from the mixture, for example, by chromatography.

The water-soluble dye composition of the present invention is a water-soluble quinophthalone dye composition, generally comprising a mixture of quinophthalone compounds represented by Formula (1) or the salts thereof which can be obtained by the sulfonation of 3'-oxybenzoquinophthalone derivatives represented by Formula (2).

The preferable quinophthalone dye composition thus obtained has two maximum absorptionwavelengths, the one existing between 455nm and 465nm, and another existing between 430nm and 440nm.

The 3'-oxybenzoquinophthalone derivatives represented by Formula (2), which are used for starting materials of the water-soluble dye composition of the present invention, can generally be obtained by heating a quinoline derivative represented by Formula (3) with naphthalene-2,3-dicarboxylic acid or its anhydride or its imide, followed by halogenizing as prescribed(See the JP No.16009/1978B specification in detail on the method for synthesizing the compound of Formula (2)).

Formula (3)

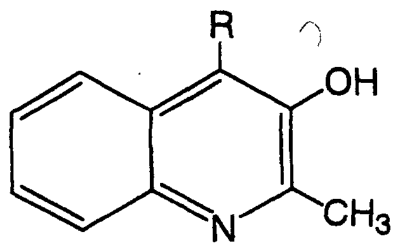

(3)

(In the formula, R shows hydrogen atom, carboxy, or halogen atom.)

It is known that structural isomers exist usually in a quinophthalone compound as described in "An Outline on Synthesized Dyestuffs" by Hiroshi Horiguchi, page308. Therefore, it is also considered that structural isomers exist in the 3'-oxybenzoquinophthalone derivative which has a structural skeleton represented by Formula (2). A content ratio in the structural isomers is not yet specified, but is not requisite for the present invention.

The sulfonation of the 3'-oxybenzoquinophthalone derivative represented by Formula (2) with fuming sulfuric acid to obtain the water-soluble quinophthalone dye composition of the present invention can be carried out as described below:

The amount of fuming sulfuric acid is preferably 3-15 times, more preferably 5-10 times as much as that of the compound of Formula (2). The fuming sulfuric acid, even if added in the 15 times or more of amount, does not provide a particular effect on the sulfonation reaction, but rather produces a much more acidic waste liquid to bring an industrial disadvantage. The amount of fuming sulfuric acid in the 3 times or less fails to dissolve the compound of Formula (2) perfectly and causes an incomplete stirring or an abnormal reaction. The concentration of fuming sulfuric acid is generally 5-65% by weight, preferably 10-45% by weight. The reaction temperature is generally 0-100°C, preferably 10-80°C. The reaction time is generally 30min-20hrs, preferably 1-10hrs, though varied depending on the reaction temperature. The sulfonation is deemed to terminate at the time when the TLC reveals that the compound of Formula (2) remains no more. After the reaction terminates, the reaction solution is poured into ice water, followed by acidic depositing or salting-out, filtering, and drying to obtain a water-soluble dye composition containing the sulfonated product of the compound of Formula (2). The dye composition generally contains the compound represented by Formula (1). The compound represented by Formula (1) is indeed a mixture of a plurality of different compounds having their respective numbers of sulfo groups (n=1-4) at the various substitution positions, but a dyestuff allowable for preparing an ink composition of the present invention.

The compound thus obtained is generally a free acid or a salt thereof. The free acid can be obtained, for example, by acidic deposition according to usually method. To the free acid compound is added, for example, sodium hydroxide, potassium hydroxide, lithium hydroxide, aqueous ammonia, methylamine or monoethanolamine under stirring in water to neutralize to obtain the sodium salt, the potassium salt, the lithium salt, the ammonium salt, the methylamine salt or the monoethanolamine salt according to the added alkaline compound, respectively.

The water-based yellow ink composition of the present invention is a dye compositioncontaining the sulfonated compound of the compound of Formula (2), or, in a more preferable mode, a composition in which the compound of Formula (1) is dissolved in water or a water-soluble organic solvent. The water-based ink composition has a pH of preferably 4-11, more preferably 5-10. The water-based ink composition, if used in an ink-jet recording printer, includes preferably a dyestuff component containing an amount as little as possible of an inorganic compound such as the hydrochloride and the sulfate of a metal positive ion. The content for the total amount of sodium chloride and sodium sulfate, for example, is preferably 1% by weight or less. The dyestuff component having a low content of inorganic salt can be obtained by a desalting treatment, for example, by a conventional method such as reverse osmotic membrane method or by stirring a dry product or a wet cake of the dye component in a mixed solvent of methanol and water, followed by filtering and drying.

The water-based ink composition of the present invention is prepared by using water as a solvent, containing the dye composition or the compound of Formula (1) of the present invention preferably in 0.1-20% by weight, more preferably 0.5-10% by weight, most preferably 1-8% by weight. The water-based ink composition of the present invention may contain further a water-soluble organic solvent or an ink regulator. The content of the water-soluble organic solvent is 0-30% by weight, preferably 5-30% by weight, and that of the ink regulator is 0-5% by weight, preferably 0-2% by weight.

The water-based ink composition of the present invention is prepared by mixing the dye composition or the compound of Formula (1) of the present invention, if necessary with a water-soluble organic solvent as described below and an ink additive, in purified water such as distilled water and an ion-exchanged water. Alternatively, the dye composition of the present invention may be added in a mixture of water, the water-soluble organic solvent and the ink additive to dissolve. The resulting ink composition may be filtered, if necessary, to remove contaminants from the composition.

The usable water-soluble organic solvent includes a C1 - C4 alkanol such as methanol, ethanol, propanol, isopropanol, butanol, isobutanol, secondary butanol and tertiary butanol; a carboxylic amide such as N,N-dimethylformamide and N,N-dimethylacetoamide; a lactam such as ε-caprolactam and N-methylpyrrolidin-2-one; urea; a cyclic urea such as 1,3-dimetylimidazolidin-2-one and 1,3-dimethylhexahydropyrimid-2-one; a ketone or a keto-alcohol such as acetone, methyl ethyl ketone, and 2-methyl-2-hydroxypentan-4-one; an ether such as tetrahydrofuran and dioxane; mono-, oligo- or poly-alkylene glycol or thioglycol having C2 - C6 alkylene units, such as ethylene glycol, 1,2- or 1,3-propylene glycol, 1,2- or 1,4-butylene glycol, 1,6-hexylene glycol, diethylene glycol, triethylene glycol, dipropylene glycol, thiodiglycol, polyethylene glycol and polypropylene glycol; polyols (triols) such as glycerin and hexane-1,2,6-triol; C1 - C4 alkyl ethers of polyhydric alcohols, such as ethylene glycol monomethyl ether, ethylene glycol monoethyl ether,

diethylene glycol monomethyl ether, diethylene glycol monoethyl ether, triethylene glycol monomethyl ether, and triethylene glycol monoethyl ether; γ-butyrolactone; and dimethylsulfoxide. These solvents may be used in a combination of the two or more.

The effective examples of water-soluble organic solvents include N-methylpyrrolidin-2-one and mono-, di- or tri-alkylene glycol having C2 - C6 alkylene units ( for example, mono-, di- or triethylene glycol, dipropylene glycol), and dimethylsulfoxide. N-methylpyrrolidin-2-one, diethylene glycol, and dimethylsulfoxide are especially preferable to use.

The ink additives include a preservative, a pH adjusting agent, a chelating agent, a rust preventive, a water-soluble ultraviolet absorbing agent, a water-soluble polymeric compound, a dye dissolving agent, and a surfactant.

The preservative includes sodium dehydroacetate, sodium sorbate, sodium 2-pyridinethiol-1-oxide, sodium benzoate and sodium pentachlorophenol.

The pH adjusting agent includes any substance that can control the ink pH within a range of 4 to 11 as long as it gives no adverse effect on the ink preparation. The examples are alkanolamines such as diethanolamine and triethanolamine; alkali metal hydroxides such as lithium hydroxide, sodium hydroxide, and potassium hydroxide; ammonium hydroxide; or alkali metal carbonates such as lithium carbonate, sodium carbonate and potassium carbonate.

The chelating reagent includes sodium ethylene-diaminetetraacetate, sodium nitrilotriacetate, sodium hydroxyethylethylenediaminetriacetate, sodium diethylene-triaminepentaacetate, and sodium uracyl diacetate.

The rust preventive includes acidic hyposulfite salts, sodium thiosulfate, ammonium thioglycolate, diisopropylammonium nitrite, tetranitrate pentaerythritol, and dicyclohexylammonium nitrite.

The water-soluble polymeric compound includes polyvinyl alcohol, a cellulose derivative, a polyamine, and a polyimine.

The water-soluble ultraviolet absorbing agent includes sulfonated benzophenone, and sulfonated benzotriazole.

The dye dissolving agent includes ε -caprolactam, ethylene carbonate, and urea.

The surfactant includes an anionic, cationic, or nonionic publicly known or worked surfactant.

A recording material to use in ink-jet printing includes an information transmission sheet such as paper and film, fiber and leather. The information transmission sheet is preferably surface-treated and, practically, is coated with an ink-acceptable layer on the basement material. The ink-acceptable layer can be supplied, for example, by impregnating or coating a cationic polymer on the above basement material; or by coating an inorganic fine-grain being enable of absorbing the dyestuff from an ink such as porous silica, alumina sol and special ceramic together with a hydrophilic polymer such as polyvinyl alcohol and polyvinyl pyrrolidone on the above basement material. The sheet with the ink-acceptable layer is generally called an ink-jet special paper (film) or a glossy paper (film), and is available on the market, for example, as Pictorico (by Asahi Glass KK), Color BJ Paper and Color BJ Photofilm sheet(both by Canon KK), Color Image Jet special paper(by Sharp KK), Superfine special glossy film(by Seiko Epson KK) and Pictafine (by Hitachi Maxell KK). The sheet can be of course used for a plain paper.

The above fiber is preferably a nonwoven fabric or a cloth of polyamide fiber such as nylon, silk and wool. A dyestuff can be fixed inside the fiber by applying an ink composition of the present invention to the fiber preferably by way of ink-jetting method, followed by saturated vapor heating (for example, about 80-120°C) or high temperature vapor heating (for example, about 150-180°C). A dyed article thus obtained has excellent in vividness, light fastness and washing resistance.

A water-based ink composition of the present invention brings about no separation by deposition during the storage because of good dissolution stability. A water-based ink composition of the present invention, if used in an ink-jet printer, brings about no blocking at the jetting nozzles and no change in physical properties even if used for a long time (under a constant recycling or with an intermittent intercept).

The water-based ink composition of the present invention can give a yellow color which has vividness and color tone close to that indicated in the "Japan Color Standard Paper published by Japan Printing Machinery Manufacturers Association", and therefore, can be used together with a magenta or cyan ink to give a wide visible range of color tone. Further, the composition, if used together with an existing magenta, cyan or black ink which is excellent in light fastness and water fastness, can provide a recorded article having excellent light fastness and water fastness.

The container holding the above water-based yellow ink composition is generally used for, though not limited to, setting in an ink-jet printer. The container is preferably specially designed so that it may be set in an ink-jet printer to use. An appropriate container such as the special designed container can be conventionally filled with the above water-based yellow ink composition to obtain the container holding said ink composition.

The ink-jet printer of the present invention is a printer set the container of the present invention containing the water-based yellow ink composition in the ink-tank section.

The colored article of the present invention can be obtained by coloring a sheet-type formed article such as paper, cloth, leather or film or any other formed article with the above water-soluble dye composition of the present invention. Amethod for coloring with the above water-soluble dye composition of the present invention is not limited as long as it can color the formed article, and can be generally carried out by coloring it conventionally with the above

prepared water-based yellow ink composition by an ink-jet printer.

EXAMPLE

The present invention will be described below in more details with Examples. "part" and "%" in the description are shown by mass unless otherwise specified.

Example 1

50 parts of the compound of Formula (2)(X=H) was added to dissolve in 300 parts of 30% fuming sulfuric acid gradually under stirring at 30°C or less, followed by elevating the temperature to 60°C. The reaction was carried out for 5hrs at 60-65°C. Thereafter, the reaction solution was cooled and poured into 1L of ice water to decompose the fuming sulfuric acid, followed by adding 30 parts of sodium chloride gradually under stirring. The resultant was stirred for 2hrs at the room temperature to deposit a dyestuff thoroughly, which was filtered to separate and washed with 150 parts of 10% sodium chloride to obtain 77 parts of wet cake. The cake was dried to obtain 39 parts of dye composition represented by Formula (1)(X=H, M=Na, a mixture of compounds of n=1,2,3 and 4. The main compound: n= 2) as a yellow crystal. 20 parts of the dried cake was heated in 50 parts of methanol under reflux for 1hr, and cooled to the room temperature. The deposited crystal was filtered to separate, washed with a little methanol and dried to obtain 12 parts of the desalted product of a compound represented by Formula (1) (X=H, M=Na) as a red crystal. Maximum absorption wavelength: 460nm, 437nm (in water); Solubility in water at pH 6-9: 100g/l or more.

The data on the dye composition obtained in Example 1 by high performance liquid chromatography is shown below:
Column: Inertsil ODS-2, 4.6ϕ×250mm,
Eluent A: 5mMol/l aqueous ammonium acetate solution, Eluent B: acetonitrile,
Flow rate: 0.7ml/min, Temperature: 40°C, Detection: UV-254nm, Gradient mode : from 10% acetonitrile at initial up to 40% acetonitrile at 15 min after, and further developing for 15min.

| No. | RT(Retention time) | AREA | CONC(Ratio of Area) |
|---|---|---|---|
| 1 | 2.48 | 13652 | 0.361 |
| 2 | 2.64 | 11340 | 0.300 |
| 7 | 4.72 | 21252 | 0.561 |
| 8 | 4.81 | 280343 | 7.406 |
| 11 | 8.39 | 11613 | 0.307 |
| 13 | 10.12 | 1244555 | 32.878 |
| 18 | 12.77 | 46937 | 1.240 |
| 19 | 12.91 | 198429 | 5.242 |
| 20 | 13.65 | 51073 | 1.349 |
| 21 | 13.80 | 912951 | 21.118 |
| 22 | 14.56 | 319980 | 8.453 |
| 23 | 14.74 | 512185 | 13.531 |
| 26 | 16.67 | 146957 | 3.882 |
| 30 | 22.79 | 5482 | 0.145 |
| 31 | 23.21 | 8608 | 0.227 |
| Total | | 3785357 | 100.000 |

Example 2

100 parts of the compound of Formula (2)(X=H) was added to dissolve in 800 parts of 30% fuming sulfuric acid gradually under stirring at 25°C or less, followed by elevating the temperature to 55°C. The reaction was carried out for 6hrs at 54-56°C. Thereafter, the reaction solution was cooled to 30°C and poured into 2L of ice water to decompose the fuming sulfuric acid, followed by adding 120 parts of sodium chloride gradually under stirring. The resultant was stirred for 5hrs at the room temperature to deposit a dyestuff thoroughly. The deposited yellow crystal was filtered to separate and washed with 10% aqueous sodium chloride to obtain 520 parts of wet cake. The wet cake thus obtained was dissolved in 1250 parts of water and neutralized with 20% aqueous sodiumhydroxide, followed by adding 300 parts of sodium chloride to salt out again. The deposited orange crystal was filtered to obtain 390 parts of wet cake.

The wet cake was stirred in 1600 parts of methanol for 1hr at 50-55°C, followed by cooling to the room temperature and filtering a dispersing crystal to separate. The crystal was washed with a littlemethanol and dried to obtain 150 parts of a dye composition represented by Formula (1)(X=H, M=Na, a mixture of compounds of n=1,2,3 and 4. The main compound: n= 2). Maximum absorption wavelength: 460nm, 437nm (in water); Solubility in water at pH 6-9: 100g/l or more; Total content of sodium chloride and sodium sulfate: 0.2% by weight or less.

The data on the dye composition obtained in Example 2 by high performance liquid chromatography is shown below: Chromatography was carried out at the same condition as in Example 1.

| No. | RT(Retention time) | AREA | CONC(Ratio of Area) |
|---|---|---|---|
| 1 | 2.49 | 5792 | 0.112 |
| 5 | 5.18 | 264148 | 5.124 |
| 6 | 5.53 | 490146 | 9.508 |
| 7 | 6.38 | 7006 | 0.136 |
| 8 | 9.16 | 20004 | 0.388 |
| 10 | 10.32 | 2442878 | 47.389 |
| 14 | 12.83 | 34263 | 0.665 |
| 15 | 12.97 | 119328 | 2.315 |
| 16 | 13.71 | 67149 | 1.303 |
| 17 | 13.88 | 806642 | 15.648 |
| 18 | 14.65 | 212231 | 4.117 |
| 19 | 14.81 | 571626 | 11.089 |
| 20 | 16.71 | 113751 | 2.207 |
| Total | | 5154964 | 100.000 |

Example 3

15 parts of the compound of Formula (2)(X=H) was added to dissolve in 93.3 parts of 15% fuming sulfuric acid gradually under stirring at 30°C or less, followed by adding 26.6 parts of 60% fuming sulfuric acid to adjust the fuming sulfuric acid concentration to 25% in the reaction solution and elevating the temperature. The reaction was carried out for 6hrs at 54-56°C. Thereafter, the reaction solution was cooled to 30°C and poured into 500 parts of ice water to decompose the fuming sulfuric acid, followed by adding 60 parts of sodium chloride gradually under stirring. The resultant was stirred for 5hrs at the room temperature to deposit a dyestuff thoroughly. The deposited yellow crystal was filtered to separate and washed with 15% aqueous sodium chloride to obtain 56.4 parts of wet cake. The wet cake thus obtained was desalted out by the same treatment as in Example 2 to obtain 17 parts of an orange dye composition represented by Formula (1)(X=H, M=Na, a mixture of compounds of n=1,2 and 3. The main compound: n= 2). Maximum absorption wavelength: 459nm, 435nm (in water); Solubility in water at pH 6-9: 100g/l or more; Total content of sodium chloride and sodium sulfate: 0.2% by weight or less.

The data on the dye composition obtained in Example 3 by high performance liquid chromatography is shown below: Chromatography was carried out at the same condition as in Example 1.

| No. | RT(Retention time) | AREA | CONC(Ratio of Area) |
|---|---|---|---|
| 2 | 2.48 | 57655 | 0.314 |
| 3 | 2.54 | 67778 | 0.369 |
| 4 | 2.88 | 21638 | 0.118 |
| 6 | 3.62 | 10946 | 0.060 |
| 8 | 4.91 | 431102 | 2.347 |
| 9 | 5.16 | 2065221 | 11.243 |
| 10 | 6.02 | 8487 | 0.046 |
| 12 | 8.56 | 77621 | 0.423 |
| 13 | 9.61 | 6405 | 0.035 |
| 14 | 9.99 | 4424165 | 24.086 |
| 22 | 12.65 | 110812 | 0.603 |
| 23 | 12.77 | 679197 | 3.698 |

(continued)

| No. | RT(Retention time) | AREA | CONC(Ratio of Area) |
|---|---|---|---|
| 24 | 13.56 | 5055074 | 27.521 |
| 26 | 14.41 | 720307 | 3.921 |
| 27 | 14.59 | 3326373 | 18.109 |
| 34 | 16.46 | 1185477 | 6.454 |
| 40 | 22.73 | 72176 | 0.393 |
| 41 | 23.15 | 47761 | 0.260 |
| Total | | 18368195 | 100.000 |

Example 4

(A) Preparation of ink

The components as described in below Table 1 were mixed to dissolve and passed through a 0.45 μm membrane filter to prepare the water-based ink composition for ink-jetting of the present invention. The water-based ink composition brought about no deposition during the storage and showed no change in property after a long storage.

Table 1

| | |
|---|---|
| The dye composition(dye component) (Desalted dye composition obtained in Example 1) | 2.0 parts |
| Water | 79.0 parts |
| Glycerin | 5.0 parts |
| Urea | 5.0 parts |
| N-methyl-2-pyrrolidone | 4.0 parts |
| IPA(Isopropyl alcohol) | 3.0 parts |
| Butyl carbitol | 2.0 parts |
| Total | 100.0 parts |

(B) Ink-jet printing

By using an ink-jet printer (Trade name: PICTY80L, made by NEC KK), ink-jet printing was done on five types of recording materials: a plain paper(Printer Paper A4, TLB5A4S, made by Canon KK), a special paper A(Color BJ Paper LC101, made by Canon KK), a special paper B(Color Image Jet Coat Paper STX73A4, made by Sharp KK), a glossy film A(Special Glossy Film MJA4SP6, made by Seiko-Epson KK), and a glossy film B(Color BJ Photo Sheet Film CA-101, made by Canon KK). The test results on hue, vividness, light fastness, and water fastness in recorded images pictured by the water-based yellow ink composition ( X=H, M=Na in Formula (1)) of the present invention are shown in Table 2.

An ink composition for the comparative example was prepared same as in the above (A), but the ink composition contained C.I. Acid Yellow 17, an azo dye generally applied for an ink-jet yellow dye in place of the dye composition in Table 1 and was adjusted to coincide in optical density with the yellow ink of the present invention. The test results on hue, vividness, light fastness, and water fastness in recorded images pictured by the ink composition for the comparative example also are shown in Table 2. Hue and vividness in the color sample of JNC's JAPAN COLOR are shown in Table 2 (The paper of the color sample Japan Color Standard Paper a paper). (C) Assessment of recorded image

(1) Hue and vividness of a recorded image:

The recorded image pictured on a recording material was subject to color determination using the COMSEK-V colorimetry (made by Nippon Kayaku KK) to calculate L* ,a* ,b* values. Hue of a recorded image was assessed by comparison with the color sample of standard yellow in the JNC's "Japan Color Standard Paper", and vividness C* of the recorded image was assessed from the calculation values by the below formula:

$$C^* =((a^*)^2 +(b^*)^2)^{1/2}$$

(2) Light fastness

A carbon arc fade meter ( by Suga Testing Machine Co.) was used to irradiate carbon arc on the recorded image for 40 hours. Grade was determined based on blue scale grade as prescribed in JIS L-0841. Color difference (ΔE) between before and after the irradiation also was determined by using the above colorimetry.

(3) Water fastness

A recorded material was set in a beaker filled with water, stirred for 2 min and dried. The color fading of the recorded image after treatment was determined based on the JIS fading gray scale. Color difference (ΔE) between before and after the treatment also was determined by using the above colorimetry.

Table 2

| Example 1 | | | | | | |
|---|---|---|---|---|---|---|
| Recording material | Hue | | | Vividness | Light fastness | Water fastness |
| | L* | a* | b* | C* | Judgment (ΔE) | Judgment (ΔE) |
| Plain paper | 85.6 | -1.2 | 77.1 | 77.1 | Grade 5 (1.5) | Grade 2 (45.9) |
| Special paper A | 85.0 | 4.2 | 89.5 | 89.6 | Grade4-5 (6.3) | Grade 5 (2.0) |
| special paper B | 86.4 | 2.5 | 97.0 | 97.0 | Grade4-5 (6.4) | Grade4-5 (7.3) |
| Glossy film A | 88.1 | -3.6 | 93.5 | 93.6 | Grade 5 (1.1) | Grade 4 (10.6) |
| Glossy film B | 89.5 | -4.6 | 114.2 | 114.2 | Grade4-5 (5.0) | Grade4-5 (5.1) |
| Comparative example 1 | | | | | | |
| Recording material | Hue | | | Vividness | Light fastness | Water fastness |
| | L* | a* | b* | C* | Judgment (ΔE) | Judgment (ΔE) |
| Plain paper | 89.0 | -12.1 | 80.0 | 80.9 | Grade4-5 (4.5) | Grade 1 (76.8) |
| Special paper A | 89.0 | -8.0 | 86.6 | 87.0 | Grade 3 (33.5) | Grade 3 (15.7) |
| Special paper B | 91.0 | -12.1 | 97.1 | 97.9 | Grade 3 (29.4) | Grade 2 (39.6) |
| Glossy film A | 91.8 | -14.6 | 90.1 | 91.3 | Grade3-4 (17.6) | Grade4-5 (6.2) |
| Glossy film B | 93.1 | -15.6 | 102.5 | 103.7 | Grade 2 (64.6) | Grade4-5 (4.7) |
| JNC standard yellow | | | | | | |
| Recording material | Hue | | | Vividness | Light fastness | Water fastness |
| | L* | a* | b* | C* | Judgment (ΔE) | Judgment (ΔE) |
| Japan Color Standard Paper | 85.6 | -6.6 | 91.1 | 91.3 | - | - |

Table 2 reveals that the ink composition made of the quinophthalone dye of the present invention has a hue close to that of the JNC's standard yellow and is therefore suitable for a yellow ink for ink-jet printing.

Table 2 also reveals that the ink composition of the present invention can provide a recorded image that is good in water fastness if pictured on a plain paper or a special paper, especially on a special paper, and that it also can provide a stable quality of recorded image that is good in light fastness with no difference brought about depending on the kind of recording material (including a plain paper). On the other hand, the comparative ink composition made of the azo dye gives a recorded image that is bad in water fastness if pictured on a plain paper or a special paper and is bad in light fastness if done on a special paper A or a glossy film B, with a great difference in quality brought about depending on the kind of recording material.

Conclusively, the yellow ink composition comprising a dye composition of the present invention allows an excellent yellow ink composition for ink-jet printing having a wide range of applications.

INDUSTRIAL APPLICABILITY

The dye composition of the present invention is excellent in water-solubility, stable in storage and characterized by having a good filterability through a membrane filter in the production process of an ink composition. The dye composition, therefore, is a dyestuff for ink-jet printing that enables to prepare a high concentration of ink and has a high color value. Furthermore, the ink composition of the present invention using the dye composition does not show a crystal deposition after a long storage, a change in physical property and a color chance, so that it has good storage stability. The ink composition of the present invention, when used as a yellow ink composition for ink-jet printing, can provide an article have excellent light fastness and water fastness. Furthermore, the composition also, when used together with a magenta, cyan or black dye, can give an ink-jet printed article that is excellent in light fastness and water fastness. The composition also can provide a vivid printed article and a hue close to that of the standard yellow as prescribed in JNC. The composition, when used together with a magenta or cyan ink, can provide a wide visible ray range of color tone.

Therefore, the ink composition of the present invention is very useful as a yellow ink composition for ink-jet printing.

## Claims

1. A water-soluble dye composition comprising a compound obtained by the sulfonation of the compound represented by Formula (2):

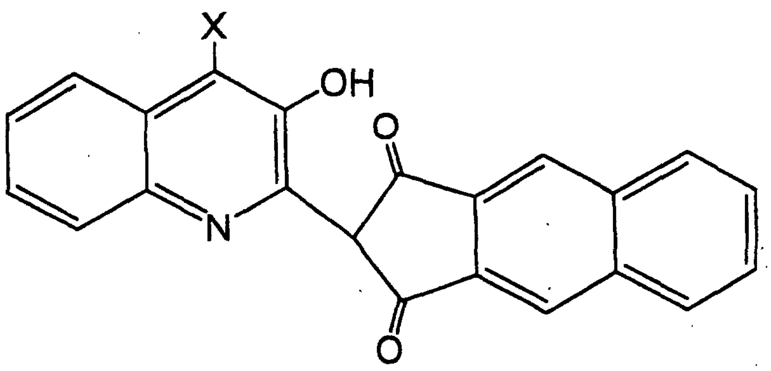

(2)

(In the formula, X shows hydrogen atom, chlorine atom, or bromine atom) or the salt thereof.

2. A water-soluble dye composition according to Claim (1), wherein the said compound obtained by the sulfonation of the compound represented by Formula (2) or the salt thereof in the aqueous solution has two maximum absorption wavelengths, the one existing between 455nm and 465nm, and another existing between 430nm and 440nm.

3. A water-soluble dye composition according to Claim (1) or (2), wherein the said compound obtained by the sulfonation of the compound represented by Formula (2) or the salt thereof is represented by Formula (1):

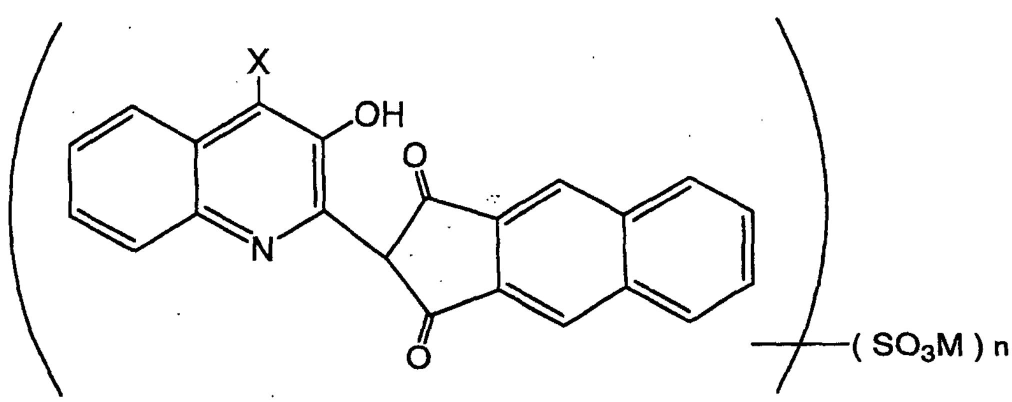

(1)

(In the formula, X shows hydrogen atom, chlorine atom, or bromine atom; M shows hydrogen atom, an alkali metal, an alkali earth metal, the cation of an organic amine or the ammonium ion; and n is an integer of 1-4).

**4.** A water-soluble dye composition according to any one of Claim (1) to (3), wherein the said compound obtained by the sulfonation of the compound represented by Formula (2) or the salt thereof is a compound obtained by the sulfonation of the compound represented by Formula (2) carried out in 5-65% by weight fuming sulfuric acid at a reaction temperature of 0-100°C or the salt thereof.

**5.** A water-soluble dye composition according to any one of Claim (1) to (4), wherein the said compound obtained by the sulfonation of the compound represented by Formula (2) or the salt thereof is a compound obtained by the sulfonation of the compound represented by Formula (2) carried out in 10-45% by weight fuming sulfuric acid at a reaction temperature of 10-80°C or the salt thereof.

**6.** A water-based yellow ink composition comprising the water-soluble dye composition according to any one of Claim (1) to (5) as a dye component.

**7.** A water-based yellow ink composition according to Claim (6), wherein the said composition contains water and water-soluble organic solvents.

**8.** A water-based yellow ink composition according to Claim (6) or (7), wherein the total content of sodium chloride and sodium sulfate in the said water-soluble dye composition is 1% by weight or less.

**9.** A water-based yellow ink composition according to any one of Claim (6) to (8), wherein the said composition is prepared for ink-jet printing.

**10.** A method for ink-jet printing which comprises using the water-based yellow ink composition according to any one of Claim (6) to (9) as an ink, in an ink-jet printing method that ink droplets are ejected responding to record signals to record onto a recording material.

**11.** A method for ink-jet printing according to Claim (10), wherein the said recording material is an information transmission sheet.

**12.** A container holding the water-based yellow ink composition according to any one of Claim (6) to (9).

**13.** An ink-jet printer that comprises being equipped with the container according to Claim (12).

**14.** A colored article comprising the water-soluble dye composition according to any one of Claim (1) to (5).

## INTERNATIONAL SEARCH REPORT

International application No.
PCT/JP99/06193

A. CLASSIFICATION OF SUBJECT MATTER
Int.Cl[7] C09B25/00, 67/44, 67/14, C09D11/02, B41M5/00, B41J2/01

According to International Patent Classification (IPC) or to both national classification and IPC

B. FIELDS SEARCHED

Minimum documentation searched (classification system followed by classification symbols)
Int.Cl[7] C09B25/00, 67/44, 67/14, C09D11/02, B41M5/00, B41J2/01

Documentation searched other than minimum documentation to the extent that such documents are included in the fields searched

Electronic data base consulted during the international search (name of data base and, where practicable, search terms used)
CAPLUS(STN), REGISTRY(STN), WPIDS(STN), BEILSTEIN(STN)

C. DOCUMENTS CONSIDERED TO BE RELEVANT

| Category* | Citation of document, with indication, where appropriate, of the relevant passages | Relevant to claim No. |
|---|---|---|
| A | DE, 3305571, A1 (Montefluos S.p.A.), 08 September, 1983 (08.09.83) & FR, 2522004, A1 & JP, 58-194958, A & GB, 2114991, A | 1-14 |
| A | WO, 96/34916, A1 (ZENECA LTD), 07 November, 1996 (07.11.96) & EP, 823927, A2 & JP, 11-504958, A | 1-14 |
| A | JP, 62-190270, A (Canon Inc.), 20 August, 1987 (20.08.87) (Family: none) | 1-14 |
| A | JP, 61-148275, A (Mitsubishi Kasei Kogyo K.K.), 05 July, 1986 (05.07.86) (Family: none) | 1-14 |
| A | JP, 51-125437, A (Teijin Limited), 01 November, 1976 (01.11.76) (Family: none) | 1-14 |
| A | DE, 2230601, B2 (MITSUBISHI CHEM IND LTD), 28 February, 1974 (28.02.74) & GB, 1338545, A & JP, 51-138724, A & US, 3816431, A | 1-14 |

☒ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 27 December, 1999 (27.12.99) | 11 January, 2000 (11.01.00) |
| Name and mailing address of the ISA/ Japanese Patent Office | Authorized officer |
| Facsimile No. | Telephone No. |

Form PCT/ISA/210 (second sheet) (July 1992)

**INTERNATIONAL SEARCH REPORT**

International application No.
PCT/JP99/06193

C (Continuation). DOCUMENTS CONSIDERED TO BE RELEVANT

| Category* | Citation of document, with indication, where appropriate, of the relevant passages | Relevant to claim No. |
|---|---|---|
| A | JP, 8-283596, A (Toyo Ink Manufacturing Co., Ltd.), 29 October, 1996 (29.10.96) (Family: none) | 1-14 |

Form PCT/ISA/210 (continuation of second sheet) (July 1992)